# EUROPÄISCHE PATENTSCHRIFT

(11) **EP 2 507 895 B1**
(45) Veröffentlichungstag und Bekanntmachung des Hinweises auf die Patenterteilung: **04.03.2020**
(21) Anmeldenummer: 10760720.2
(22) Anmeldetag: 06.10.2010
(51) Int. Cl.: H02K 1/14, H02K 11/00, H02K 3/52, H02K 5/22, H02K 11/40

(54) **ELEKTRONISCH KOMMUTIERTER ELEKTROMOTOR MIT REDUZIERTER STÖRABSTRAHLUNG**
ELECTRONICALLY COMMUTATED ELECTRIC MOTOR HAVING REDUCED INTERFERENCE EMISSION
MOTEUR ÉLECTRIQUE SANS BALAIS AVEC RAYONNEMENT PERTURBATEUR RÉDUIT

(30) Priorität: 03.12.2009 DE 102009047461
(43) Veröffentlichungstag der Anmeldung: 10.10.2012
(73) Patentinhaber: Robert Bosch GmbH, 70442 Stuttgart (DE)
(72) Erfinder: HEIN, Bernd, 72270 Baiersbronn/Schoenmuenzach (DE); THIERY, Jerome, F-67100 Strasbourg (FR); HEIER, Christoph, 76473 Iffezheim (DE); LUNGHARD, Karlheinz, 77815 Buehl (DE)
(86) Internationale Anmeldenummer: PCT/EP2010/064875
(87) Internationale Veröffentlichungsnummer: WO 2011/067015

(56) Entgegenhaltungen:
- EP-A1- 1 024 578
- EP-A2- 1 608 052
- WO-A1-2007/093544
- GB-A- 2 445 775

## Beschreibung

### Technisches Gebiet

Die Erfindung betrifft Elektromotoren, insbesondere elektronisch kommutierte Elektromotoren, wie beispielsweise einen Klauenpolmotor.

### Stand der Technik

Elektromotoren, insbesondere Klauenpolmotoren, sind aus dem Stand der Technik (siehe z. B. EP1024578) bekannt. Klauenpolmotoren werden dort angewendet, wo geringe Drehzahlen erforderlich sind. Beispielsweise werden Klauenpolmotoren für Wasserpumpen und dergleichen eingesetzt.

Klauenpolmotoren weisen zwei in einer Umfangsrichtung verlaufende (gewickelte) Statorspulen auf, die eine Klauenanordnung umgeben. Die Klauenanordnung stellt den Stator des Elektromotors dar und umfasst in axialer Richtung ausgerichtete Statorzähne, mit denen ein wechselndes Magnetfeld hervorgerufen werden kann. Die Klauenanordnung ist in der Regel zweiteilig mit Teilanordnungen aus magnetischem Material ausgebildet, wobei jede der Teilanordnungen einen Ring aufweist, von dem in axialer Richtung (d.h. senkrecht zur Ringfläche) Statorzähne abstehen. Weiterhin weist jede der Teilanordnungen an einem Ende der Statorzähne einseitig einen sich radial nach außen erstreckendem Abschnitt auf.

Die Teilanordnungen sind komplementär zueinander ausgebildet, wobei die in radialer Richtung äußeren Enden der Teilanordnungen im zusammengesetzten Zustand über einen Blechring so miteinander verbunden sind, dass ein magnetischer Rückschluss zwischen den Teilanordnungen gebildet wird. Die Klauenanordnung bildet einen torusförmigen Stator aus, wobei im Inneren des Torus die Statorspulen angeordnet sind. Die Klauen der Teilanordnungen greifen im zusammengesetzten Zustand so ineinander, dass diese sich nicht berühren und zueinander gleiche Abstände aufweisen. Je nach Bestromung der Statorspulen bilden benachbarte Klauen einen Südpol und einen Nordpol bzw. umgekehrt aus.

Im von der Klauenanordnung des Klauenpolmotors umgebenen Bereich befindet sich in der Regel ein Läufer in Form eines Rotors, der üblicherweise mit Permanentmagneten oder aus einem Ferritmaterial ausgebildet ist. Durch wechselweises Bestromen der Statorspulen ändert sich die Polung von benachbarten Statorzähnen, wodurch eine Kraft auf den Rotor ausgeübt wird und der Rotor angetrieben wird.

Durch die Versorgung eines solchen Elektromotors mit einer elektrischen Wechselgröße entstehen elektromagnetische Störungen (EMV). Derartige Störungen, insbesondere die Abstrahlung von elektromagnetischer Strahlung von Leitern, sowie leitungsgebundene Störungen können durch elektrische Bauelemente in dem Elektromotor sowie durch metallische Bauteile, die durch magnetische Wirbelströme zur EMV-Abstrahlung angeregt werden, hervorgerufen werden. Üblicherweise wird die Abstrahlung reduziert, indem weitere elektrische Bauteile, wie beispielsweise Kondensatoren und Drosselspulen, in die Ansteuerschaltung bzw. in den Elektromotor integriert werden. Dies ist jedoch aufwändig und erhöht die Fehleranfälligkeit des Gesamtsystems.

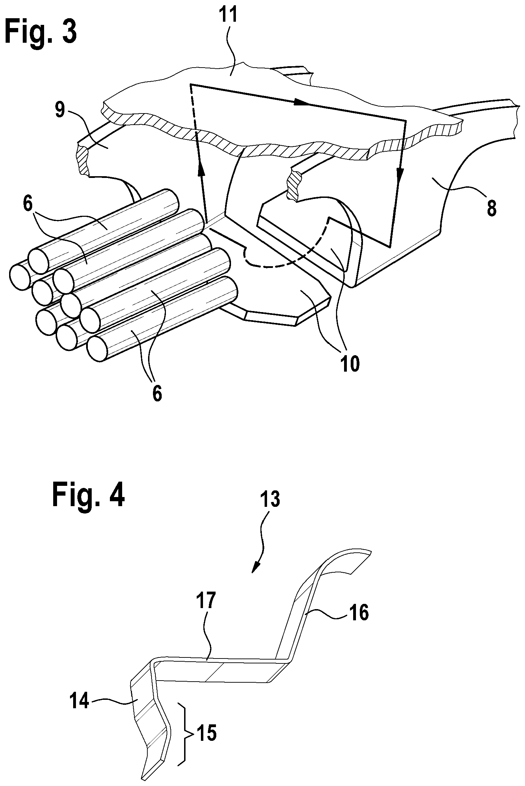

Die EP1608052 offenbart einen Aktuator mit einer Klauenpolmotor. Seine Statoranordnung umfast ein erstes Klauenelement 7a und ein zweites Klauenelement 7b. Gemäß dieses Dokument ist ebenfalls vorgesehen, dass das erste Klauenelement und das zweite Klauenelement, jeweils einen ringförmigen Abschnitt aufweisen, der einander gegenüberliegende seitliche Begrenzungen eines torusförmigen Statorkörpers in axialer Richtung definiert, wobei die Klauenelemente mit ihrem in radialer Richtung außen liegenden Rand über einen zylinderförmigen Rückschlussring miteinander verbunden sind, und eine elektrisch leitfähige Statoranordnung mit einem in Umfangsrichtung verlaufenden Wicklungskanal bilden, wobei in dem Wicklungskanal eine Statorwicklung 6a oder 6b verläuft, sowie ein elektrisch leitfähiges Kontaktelement 30 vorgesehen ist (siehe Figur 4), das einen zusätzlichen elektrischen Kontakt der Steckervorrichtung mit der Statoranordnung elektrisch verbindet.

Es ist Aufgabe der vorliegenden Erfindung, einen elektronisch kommutierten Elektromotor zur Verfügung zu stellen, bei dem die EMV-Abstrahlung reduziert ist.

### Offenbarung der Erfindung

Diese Aufgabe wird durch die Statoranordnung gemäß Anspruch 1 sowie den Elektromotor gemäß dem nebengeordneten Anspruch gelöst.

Weitere vorteilhafte Ausgestaltungen sind in den abhängigen Ansprüchen angegeben.

Gemäß einem ersten Aspekt ist eine Statoranordnung für einen elektronisch kommutierten Elektromotor, insbesondere für einen rotatorischen Klauenpolmotor, vorgesehen. Die Statoranordnung umfasst:
- einen elektrisch leitfähigen Stator mit einem in Umfangsrichtung verlaufenden Wicklungskanal;
- eine in dem Wicklungskanal verlaufende Statorwicklung;
- eine oder mehrere Zuführungsleitungen zum elektrischen Kontaktieren der Statorwicklung; und
- ein Kontaktelement, das eine der Zuführungsleitungen mit dem Stator elektrisch verbindet.

Eine Idee der vorliegenden Erfindung besteht darin, die EMV-Abstrahlung eines elektronisch kommutierten Elektromotors dadurch zu reduzieren, dass der elektrisch leitfähige Stator, insbesondere die Komponenten, mit denen die Statoranordnung aufgebaut ist, mit einer der Zuführungsleitungen, die zum Ansteuern der Statorwicklung dienen, verbunden werden. Dadurch lassen sich insbesondere Wirbelströme in dem Stator, die durch die Bewegung eines Rotors induktiv erzeugt werden, erheblich reduzieren.

Weiterhin kann der Stator sich in einer axialen Richtung des Elektromotors erstreckende Statorzähne aufweisen.

Ferner kann das Kontaktelement ein Kontaktblech aufweisen, das verspannt angeordnet ist, um eine Kontaktkraft auf den Stator und/oder die Zuführungsleitung auszuüben.

Das Kontaktelement kann einen Leiter aufweisen, der mit dem Stator und/oder der Zuführungsleitung vernietet, verklebt, verlötet oder verschweißt ist.

Gemäß einem weiteren Aspekt ist ein Elektromotor mit der obigen Statoranordnung vorgesehen.

### Kurzbeschreibung der Zeichnungen

Ausführungsformen werden nachfolgend anhand der beigefügten Zeichnungen näher erläutert. Es zeigen:
- Figur 1: eine Ausschnittsdarstellung eines Klauenpolmotors;
- Figur 2: eine Explosionsdarstellung des Klauenpolmotors der Figur 1;
- Figur 3: einen Ausschnitt des Stators des Klauenpolmotors der Figur 1; und
- Figur 4: ein Kontaktierelement zum Herstellen einer elektrischen Verbindung zwischen einer elektrischen Zuführung und der Statoranordnung.

### Beschreibung von Ausführungsformen

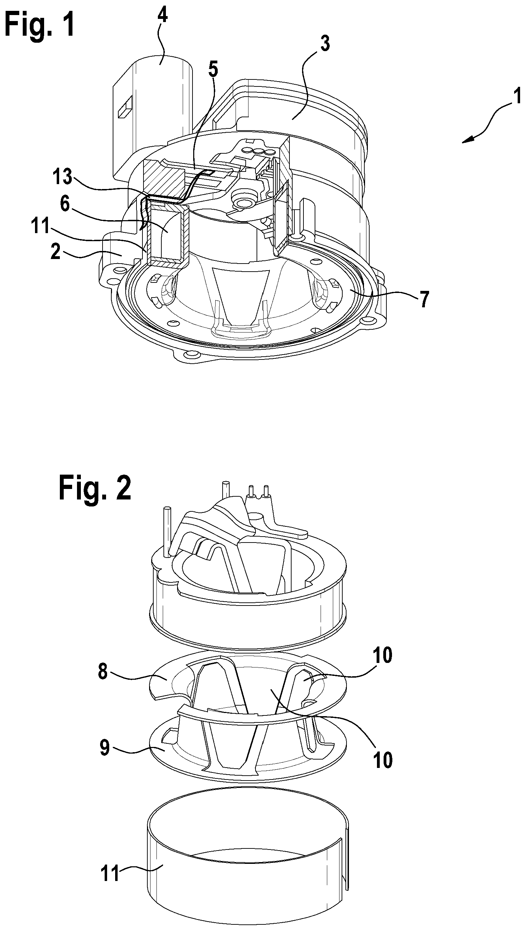

Figur 1 zeigt eine perspektivische Darstellung eines Klauenpolmotors 1, der in einem Gehäuse 2 angeordnet ist. An dem Gehäuse 2 ist eine Steuereinheit 3 angeordnet, die über eine Steckverbindung 4 mit elektrischer Leistung versorgt wird. Die Steuereinheit 3 generiert eine elektrische Ansteuergröße zur elektrischen Ansteuerung des Klauenpolmotors 1. Dazu sind zwischen der Steuereinheit 3 und Statorspulen 6 des Klauenpolmotors 1 Zuführungsleitungen 5 vorgesehen.

Die Zuführungsleitungen 5 stellen Verbindungsleitungen zwischen der Steuereinheit 3 und Statorspulen 6 dar, um die elektrische Ansteuergröße zu übertragen. Die Verbindungsleitungen können beispielsweise als Stanzblech und dergleichen ausgebildet sein.

Im Gehäuse 2 befindet sich eine ringförmige bzw. torusförmige Statoranordnung 7, die in den Darstellungen der Figuren 2 und 3 detaillierter dargestellt ist. Die Statoranordnung 7 weist ein erstes Klauenelement 8 und ein zweites Klauenelement 9 auf, die jeweils einen ringförmigen Abschnitt aufweisen, der einander gegenüberliegende seitliche Begrenzungen des torusförmigen Statorkörpers in axialer Richtung definiert.

Der ringförmige Abschnitt jedes der Klauenelemente 8, 9 weist Klauen 10 auf. Jede der Klauen 10 weist eine sich nach außen verjüngende Form auf und ist in einem Segment des ringförmigen Abschnitts an einem in radialer Richtung innenliegenden Rand des ringförmigen Abschnitts angeordnet. Jede der Klauen 10 erstreckt sich in axialer Richtung. Die Klauen 10 bilden die Statorzähne. An den beiden Klauenelementen 8, 9 sind die Klauen 10 so angeordnet, dass diese im zusammengesetzten Zustand der Klauenelemente 8, 9 ineinander greifen, ohne sich zu berühren. Dadurch bleibt zwischen benachbarten Klauen ein Luftspalt 12, d.h. in Umfangsrichtung zueinander benachbarte Klauen 10 stehen nicht in direktem Kontakt miteinander.

Um einen magnetischen Rückschluss zu gewährleisten, sind die Klauenelemente 8, 9 vorzugsweise mit ihrem in radialer Richtung außen liegenden Rand über einen zylinderförmigen Rückschlussring 11 miteinander verbunden. Zwischen den Klauen 10, den ringförmigen Abschnitten der Klauenelemente 8, 9 und dem Rückschlussring 11 wird somit ein Kanal für die beiden Statorspulen 6 gebildet.

Die Statorspulen 6 sind in Umfangsrichtung in diesem Kanal gewickelt und umgeben somit konzentrisch einen (nicht gezeigten) Rotor, der im Inneren des Stators 7 angeordnet werden kann. Die beiden Statorspulen 6 werden wechselweise jeweils nur in einer Richtung bestromt, wobei die Stromrichtungen in den Statorspulen 6 gegenläufig sind. Mit anderen Worten steuert die Steuereinheit 3 die Statorspulen 6 periodisch so an, dass während einer ersten Zeitperiode eine erste der Statorspulen 6 mit einer Ansteuergröße bestromt wird, so dass ein magnetisches Feld zwischen benachbarten Klauen 10 ausgebildet wird. Während einer zweiten Zeitperiode wird eine zweite der Statorspulen 6 mit einer Ansteuergröße bestromt, bei der ein Strom in einer bezüglich der Umfangsrichtung der Statoranordnung 7 entgegengesetzten Richtung die zweite Statorspule 6 fließt. Je nach Wahl der gerade bestromten Statorspule 6 bildet sich in der Umgebung der Luftspalte 12 zwischen den Klauen 10 ein magnetisches Feld einer bestimmten Richtung aus, das mit dem Rotor wechselwirkt, so dass dieser angetrieben wird. Der Rotor kann dazu Permanentmagneten aufweisen oder kann aus einem Ferritmaterial, insbesondere aus einem Plastoferritmaterial, gefertigt sein.

Die Klauenelemente 8, 9 sowie der Rückschlussring 11 sind aus einem metallischen Material, vorzugsweise aus Blechen, ausgebildet und sind somit leitfähig. In den Blechen können sich aufgrund des durch die Statorspulen 6 bewirkten magnetischen Felds Wirbelströme ausbilden, was zu einer EMV-Störabstrahlung des Stators führen kann. Aus diesem Grund ist vorgesehen, die die Statorspulen 6 umgebende Statoranordnung 7 mit einer der Zuführungsleitungen 5 elektrisch zu verbinden. Dazu ist ein elektrisch leitfähiges Kontaktelement 13 vorgesehen, das die Zuführungsleitung 5 mit der Statoranordnung 7 elektrisch verbindet.

Gemäß einer Ausführungsform kann das Kontaktelement 13, wie in Figur 4 dargestellt, als elektrisch leitendes Kontaktblech ausgebildet sein. Das Kontaktblech kann einen ersten Schenkel 14 aufweisen, der zwischen einer Innenwand des Gehäuses 2 und der darin gehaltenen Statoranordnung 7, insbesondere des Rückschlussrings 11 der Statoranordnung 7, anordbar ist. Das erste Schenkelelement 14 kann beispielsweise eine Verformung 15 aufweisen, die im eingebauten Zustand zwischen der Innenwand des Gehäuses 2 und dem Rückschlussring 11 verspannt angeordnet ist. Dadurch wirkt eine elastische Kraft zwischen dem Gehäuse 2 und dem Rückschlussring 11, wodurch die Statoranordnung 7 elektrisch durch das Kontaktelement 13 kontaktiert wird.

Insbesondere kann der verformte Abschnitt 15 V-förmig ausgebildet sein, wobei der erste Schenkelabschnitt 14 so verspannt angeordnet ist, dass der Scheitel des V-förmigen Abschnitts 15 gegen den Rückschlussring 11 drückt, um diesen elektrisch zu kontaktieren. Alternativ kann der Scheitel des V-förmigen Abschnitts 15 auch gegen das Gehäuse 2 drücken.

Das Gehäuse 2 ist vorzugsweise nicht leitend ausgebildet, so dass die äußere Umgebung des Klauenpolmotors von den Ansteuergrößen isoliert sein kann.

Das Kontaktelement 13 weist weiterhin einen zweiten Schenkelabschnitt 16 auf, der im eingebauten Zustand elastisch auf eine der Zuführungsleitungen 5 drückt. Dazu ist die betreffende Zuführungsleitung 5 an einem Ende der Statoranordnung 7 in axialer Richtung angeordnet, so dass die Schenkelabschnitte 14, 16 einen stumpfen, rechtwinkligen oder spitzen Winkel einschließen. Fixiert ist das Kontaktelement 13 über einen Halteabschnitt 17, der zwischen einem der ringförmigen Abschnitten eines der Klauenelemente 8, 9 und einem entsprechenden, dem entsprechenden ringförmigen Abschnitt gegenüberliegenden Gehäuseabschnitt angeordnet ist, um das Kontaktelement 13 zuverlässig in dem Gehäuse 2 zu fixieren und die Andruckkraft für den zweiten Schenkelabschnitt 16 zu gewährleisten.

Die Kontaktierung zwischen einer der Zuführungsleitungen 5 und der Statoranordnung 7 kann weiterhin mit einer angelöteten bzw. angeschweißten Drahtverbindung, über eine mit der entsprechenden Zuführungsleitung 5 und der Statoranordnung 7 verklebten, elektrisch leitende Folie, über einen zwischen der Zuführungsleitung 5 und der Statoranordnung 7 vorgesehenen elektrisch leitenden Lack und dergleichen hergestellt werden.

Das Kontaktelement 13 kann mit der Statoranordnung 7 auch über eine geeignete Verbindung, wie beispielsweise eine Nietung, Schweißung oder Lötung, verbunden sein.

Die elektrische Verbindung zwischen der Statoranordnung und einer der Zuführungsleitungen 5 bewirkt eine deutlich verringerte elektromagnetische Störabstrahlung des Klauenpolmotors, obwohl die Statoranordnung 7 mit einer elektrischen Wechselgröße beaufschlagt wird.

## Patentansprüche

1. Statoranordnung (7) für einen rotatorischen Klauenpolmotor, umfassend ein erstes Klauenelement (8) und ein zweites Klauenelement (9),
wobei das erste Klauenelement (8) und das zweite Klauenelement (9), jeweils einen ringförmigen Abschnitt aufweisen, der einander gegenüberliegende seitliche Begrenzungen eines torusförmigen Statorkörpers in axialer Richtung definiert, wobei die Klauenelemente (8, 9) mit ihrem in radialer Richtung außen liegenden Rand über einen zylinderförmigen Rückschlussring (11) miteinander verbunden sind, und eine elektrisch leitfähige Statoranordnung (7) mit einem in Umfangsrichtung verlaufenden Wicklungskanal bilden, wobei in dem Wicklungskanal eine Statorwicklung (6) verläuft, sowie ein elektrisch leitfähiges Kontaktelement (13) vorgesehen ist, das eine Zuführungsleitung (5) zum elektrischen Kontaktieren der Statorwicklung (6) mit der Statoranordnung (7) elektrisch verbindet.

2. Statoranordnung (7) nach Anspruch 1, wobei die Klauenelemente (8, 9) sowie der Rückschlussring 11 aus einem metallischen Material, vorzugsweise aus Blechen, ausgebildet sind.

3. Statoranordnung (7) nach einem der vorangehenden Ansprüche, wobeider ringförmige Abschnitt jedes der Klauenelemente 8, 9 Klauen 10 aufweist.

4. Statoranordnung (7) nach einem der vorangehenden Ansprüche , wobei die Klauenelemente (8, 9) in einer axialen Richtung des Elektromotors (1) erstreckende Statorzähne (10), insbesondere Klauen (10) aufweist.

5. Statoranordnung (7) nach einem der vorangehenden Ansprüche, wobei das Kontaktelement (13) ein Kontaktblech aufweist, das verspannt angeordnet ist, um eine Kontaktkraft auf die Statoranordnung (7) und/oder die Zuführungsleitung (5) auszuüben.

6. Statoranordnung (7) nach einem der Ansprüche 1 bis 4, wobei das Kontaktelement (13) einen Leiter aufweist, der mit der Statoranordnung (7) und/oder der Zuführungsleitung vernietet, verklebt, verlötet oder verschweißt ist.

7. Elektromotor (1) mit einer Statoranordnung (7) nach einem der vorangehenden Ansprüche.

## Claims

1. Stator arrangement (7) for a rotary claw pole motor, comprising a first claw element (8) and a second claw element (9),
wherein the first claw element (8) and the second claw element (9) each have an annular section which defines lateral boundaries, lying opposite one another, of a toroidal stator body in the axial direction, wherein the claw elements (8, 9) are connected to one another by their outer edge in the radial direction, via a cylindrical return ring (11),
and form an electrically conductive stator arrangement (7) with a winding duct which runs in the circumferential direction, wherein a stator winding (6) runs in the winding duct, and an electrically conductive contact element (13) is provided which electrically connects a feedline (5), for making electrical contact with the stator winding (6), to the stator arrangement (7).

2. Stator arrangement (7) according to Claim 1, wherein the claw elements (8, 9) and the return ring (11) are formed from a metallic material, preferably from pieces of sheet metal.

3. Stator arrangement (7) according to one of the preceding claims, wherein the annular section of each of the claw elements (8, 9) has claws (10).

4. Stator arrangement (7) according to one of the preceding claims, wherein the claw elements (8, 9) have stator teeth (10), in particular claws (10), extending in an axial direction of the electric motor (1).

5. Stator arrangement (7) according to one of the preceding claims, wherein the contact element (13) has a contact plate which is arranged in a tensioned fashion, in order to apply a contact force to the stator arrangement (7) and/or to the feedline (5).

6. Stator arrangement (7) according to one of Claims 1 to 4, wherein the contact element (13) has a conductor which is riveted, bonded, soldered or welded to the stator arrangement (7) and/or the feedline.

7. Electric motor (1) having a stator arrangement (7) according to one of the preceding claims.

## Revendications

1. Agencement statorique (7) pour un moteur à pôles à griffes rotatif comprenant un premier élément à griffes (8) et un second élément à griffes (9),
dans lequel le premier élément à griffes (8) et le second élément à griffes (9) comportent chacun une partie annulaire qui définit des délimitations latérales opposées l'une à l'autre d'un corps statorique toroïdal dans une direction axiale, dans lequel les éléments à griffes (8, 9) sont reliés l'un à l'autre, par leur bord situé à l'extérieur dans la direction radiale et par l'intermédiaire d'une bague de retour cylindrique (11), et forment un agencement statorique (7) électriquement conducteur avec un canal d'enroulement s'étendant circonférentiellement, dans lequel un enroulement statorique (6) s'étend dans le canal d'enroulement, et il est prévu un élément de contact électriquement conducteur (13) qui relie électriquement une ligne d'alimentation (5) destinée à mettre en contact électrique l'enroulement statorique (6) avec l'agencement statorique (7).

2. Agencement statorique (7) selon la revendication 1, dans lequel les éléments à griffes (8, 9) et la bague de retour (11) sont réalisés en un matériau métallique, de préférence à partir de plaques métalliques.

3. Agencement statorique (7) selon l'une des revendications précédentes, dans lequel la partie annulaire de chacun des éléments à griffes (8, 9) comporte des griffes (10).

4. Agencement statorique (7) selon l'une des revendications précédentes, dans lequel les éléments à griffes (8, 9) comportent des dents statoriques (10), en particulier des griffes (10), s'étendant dans une direction axiale du moteur électrique (1).

5. Agencement statorique (7) selon l'une des revendications précédentes, dans lequel l'élément de contact (13) comporte une plaque de contact qui est disposée de manière à exercer une force de contact sur l'agencement statorique (7) et/ou sur la ligne d'alimentation (5).

6. Agencement statorique (7) selon l'une des revendications 1 à 4, dans lequel l'élément de contact (13) comporte un conducteur qui est riveté, collé, brasé ou soudé au dispositif statorique (7) et/ou à la ligne d'alimentation.

7. Moteur électrique (1) comportant un agencement statorique (7) selon l'une des revendications précédentes.
